# EUROPEAN PATENT APPLICATION

(11) **EP 1 719 889 A1**
(43) Date of publication of application: **08.11.2006**
(21) Application number: 04807525.3
(22) Date of filing: 22.12.2004
(51) Int. Cl.: F02C 9/18, F02C 1/05, F02C 3/10, F01D 17/00, G21D 3/00

(54) **GAS TURBINE PLANT**

(30) Priority: 23.02.2004 JP 2004046250
(71) Applicant: MITSUBISHI HEAVY INDUSTRIES, LTD., Tokyo 108-8215 (JP)
(72) Inventor: YANAI, Noboru, Takasogo-shi, Hyogo 6768686 (JP); TSUKUDA, Yoshiaki, Takasogo-shi, Hyogo 6768686 (JP); SUGISHITA, Hideaki, Takasogo-shi, Hyogo 6768686 (JP); KAMOHARA, Satoru, Takasogo-shi, Hyogo 6768686 (JP)
(74) Representative: Intes, Didier Gérard André
(86) International application number: PCT/JP2004/019168
(87) International publication number: WO 2005/080771

(57) **Abstract**

A gas turbine plant, wherein a first gas turbine positioned coaxially with a compressor and a second gas turbine positioned coaxially with a generator are rotated by a coolant heated by heat energy provided by the fission of a coated particle fuel. The rotational speed of the first gas turbine is controlled by controlling a flow in the bypass passage of the second gas turbine.

## Description

### Technical Field

The present invention relates to a gas turbine plant which utilizes heat being generated by a high-temperature gas-cooled reactor, and especially, relates to a gas turbine plant which is provided with a gas turbine compressor being driven by gas heated by the heat of a high-temperature gas-cooled reactor and supplying exhaust gas to the high-temperature gas-cooled reactor.

### Background Art

A high-temperature gas-cooled reactor being one type of a nuclear reactor employs, as fuels, coated-particle fuels that are nuclear fuels being clad with heat-resistant pyrolytic carbons (PyC) and silicon carbides (SiC) and also employs heat-resistant graphite for the retarder and the in-core structural materials, and helium gas is used for the coolant thereof. In addition, block type of fuels being graphite blocks with fuel rods inserted therein and pebble bed fuels being spherically compact are employed as coated-particle fuels to be used for a high-temperature gas-cooled reactor. Then, by having the reactor core composed of ceramics instead of metal materials, the reactor core can withstand very high temperature nearly as high as 1000°C.

In consequence, by utilizing the heat generated by a high-temperature gas-cooled reactor, high outlet gas temperature of over 800°C that cannot be achieved by other types of nuclear reactor can be attained, thereby achieving electrical power generation of high thermal efficiency. In addition, the fuels to be used are superior in safety because fuel melting and breakage of a coating layer scarcely occur when the fuel temperature increases, and fission products are maintained even in accident conditions. Moreover, in Japan, a "High Temperature Engineering Test Reactor" (HTTR) is operated as a high-temperature gas-cooled reactor.

In an electrical power generation plant, such a high-temperature gas-cooled reactor as described hereinabove is employed for the steam cycle electric power generation in which steam is generated by high temperature gas from a high-temperature gas-cooled reactor, so as to drive a steam turbine, and is employed for the closed cycle gas turbine electric power generation in which a gas turbine is driven by high temperature gas from a high-temperature gas-cooled reactor. Here, in a steam turbine electrical power generation having steam conditions being equivalent to those of conventional thermal electrical power generation, approximately 40% thermal efficiency is achieved, but by employing the closed cycle gas turbine electrical power generation having the nuclear reactor coolant outlet temperature of approximately higher than 850°C, there is a possibility of achieving the thermal efficiency ranging from 45% to 50%.

Then, as a high-temperature gas-cooled reactor utilized in the closed cycle gas turbine electrical power generation having high thermal efficiency, is disclosed a high-temperature gas-cooled reactor in a gas turbine plant in which a system circulating in the high-temperature gas-cooled reactor is different from a system circulating in the gas turbine. (See the Patent Literature 1.) In the gas turbine plant being disclosed in the Patent Literature 1, helium gas in the secondary circuit is heated by high temperature helium gas being obtained by the high-temperature gas-cooled reactor provided to the primary circuit, and then, a gas turbine is driven by the heated helium gas in the secondary circuit.

Additionally, the present applicant disclosed a gas turbine plant in which a gas turbine sharing a same shaft with a high pressure compressor and a gas turbine sharing a same shaft with a generator are provided in such a manner as to be connected by different shafts and the gas turbines being connected by the different shafts are driven by helium gas from a high-temperature gas-cooled reactor. (See the Patent Literature 2.) In this gas turbine plant, helium gas discharged from the gas turbines is supplied to the high-temperature gas-cooled reactor after being compressed by a compressor. A "Pebble Bed Modular Reactor"(PBMR) has been developed, which is employed for such a gas turbine plant as described hereinabove and is provided with a pebble bed reactor core using pebble bed fuels.

Moreover, the gas turbine plant in the Patent Literature 2 is a gas turbine plant that is provided with two-shaft gas turbines, wherein a gas turbine being connected to a generator by a same shaft is also connected to a low pressure compressor by the same shaft. As a result, is increased a load which is to be applied to a gas turbine being connected to a low pressure compressor and a generator by one shaft. Therefore, a gas turbine plant using the "PBMR" has been developed, wherein, in order to distribute the load, a gas turbine being connected to a low pressure compressor by one shaft is provided and a gas turbine plant including three-shaft gas turbines is adopted.
Patent Literature 1: Patent Application Laid Open as H10-322215.
Patent Literature 2: Patent Application Laid Open as H9-144557.

### Disclosure of the Invention

### Problems to be Solved by the Invention

However, in a high-temperature gas-cooled reactor, the rotating speed of a turbine sharing a same shaft with a compressor can be decreased, but cannot be increased. Therefore, when a turbine rotates at a low speed during rated load operation because the plant efficiency and the helium gas flow volume of an actual plant drift from the designed values, the rotating speed of the turbine cannot be increased, which may consequently, produce a concern that the rotating blades which are provided to the compressor and the turbine will resonate, resulting in blades breakage.

It is an object of the present invention to provide a gas turbine plant which consists of a closed cycle system and can control each gas turbine safely during the rated load operation.

### Means for Solving the Problem

In order to achieve the object, a gas turbine plant in accordance with the present invention comprises a high-temperature gas-cooled reactor which warms a coolant by thermal energy being obtained by nuclear fission of clad fission products in coated-particle fuels; a first gas turbine that is rotated by the coolant being warmed by the high-temperature gas-cooled reactor and shares a same shaft with a compressor compressing the coolant; a second gas turbine that is rotated by the coolant being discharged from the first gas turbine and shares a same shaft with a generator performing electrical power generation; and a bypass pathway that has the second gas turbine bypassed to the coolant; wherein, during the rated load operation, the flow volume of the coolant flowing through the bypass pathway is controlled so as to make the rotating speed of the first gas turbine fall within a range of a predetermined rotating speed.

### Advantages of the Invention

In accordance with the present invention, when the rotating speed of a gas turbine plant including a plurality of shafts is increased to the rated rotating speed during start-up, by providing bypass valves and controlling the lift of the bypass valves, each of the gas turbines sharing same shafts with the compressors is controlled independently, thereby making it possible to rev up. Therefore, compared to a case where all the gas turbines are revved up at a time, it is possible to confirm whether each gas turbine is revved up to the rated rotating speed or not, so that the gas turbines can be started up safely.

### Brief Description of Drawings

FIG. 1 is a block diagram showing a construction of a gas turbine plant in accordance with a first embodiment of the prevent invention.
FIG. 2 is a block diagram showing a construction of a gas turbine plant in accordance with a second embodiment of the prevent invention.
FIG. 3 is a block diagram showing a construction of a gas turbine plant in accordance with a third embodiment of the present invention.
FIG. 4A is a timing chart showing the transition of the rotating speed of a high pressure turbine during start-up of a gas turbine plant of FIG. 3.
FIG. 4B is a timing chart showing the transition of the rotating speed of a low pressure turbine during start-up of a gas turbine plant of FIG. 3.
FIG. 4C is a timing chart showing the transition of the lift of a bypass valve during start-up of a gas turbine plant of FIG. 3
FIG. 5 is a block diagram showing another construction of a gas turbine plant in accordance with a third embodiment of the present invention.
FIG. 6 is a block diagram showing another construction of a gas turbine plant in accordance with a third embodiment of the present invention.

### List of Reference Symbols

1. High-Temperature Gas-Cooled Reactor
2. High Pressure Turbine (HPT)
3. Low Pressure Turbine (LPT)
4. Power Gas Turbine (PT)
5. Generator
6. Heat Exchanger
7. Precooler
8. Low Pressure Compressor (LPC)
9. Intercooler
10. High Pressure Compressor (HPC)
11. Bypass Pathway
11a Orifice
11b and 15 Bypass Valves
12. Temperature Detector
13. Flow Element
14. Bypass Control Section

### Best Mode for Carrying Out the Invention

### <Fist Embodiment >

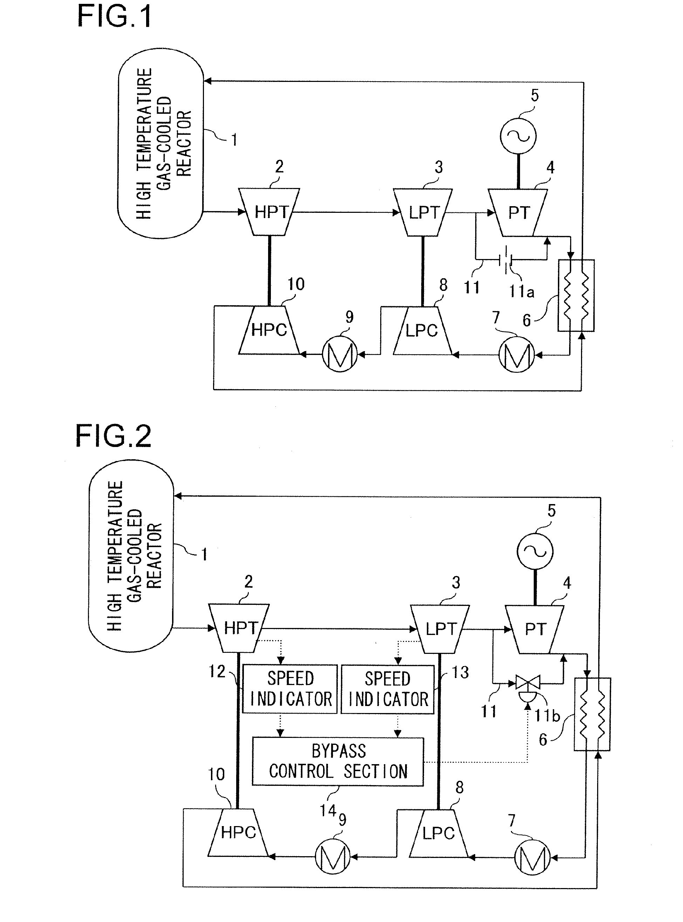

Referring now to the drawings, a first embodiment of the present invention will be described hereinafter. FIG. 1 is a block diagram showing the construction of a gas turbine plant in accordance with the present embodiment.

A gas turbine plant in FIG. 1 comprises a high-temperature gas-cooled reactor 1 which provides helium gas with thermal energy generated by nuclear fission of fission products and discharges high temperature helium gas; a high pressure gas turbine (HPT) 2 which is driven by the helium gas being discharged from the high-temperature gas-cooled reactor 1; a low pressure turbine (LPT) 3 which is driven by the helium gas being discharged from the HPT 2; a power gas turbine (PT) 4 which is driven by the helium gas being discharged from the LPT 3; a generator which is so constructed as to be connected to the PT 4 by a same shaft and rotated by the PT 4; a heat exchanger 6 which performs heat exchange by being supplied with the helium gas discharged from the PT 4; a precooler 7 which cools the helium gas from which heat is released by the heat exchanger 6; a low pressure compressor (LPC) 8 which compresses the helium gas being cooled by the precooler 7; an intercooler 9 which cools the helium gas being compressed and pressurized by the LPC 8; and a high pressure compressor (HPC) 10 which compresses the helium gas being cooled by the intercooler 9 so as to supply to the heat exchanger 6.

In addition, the gas turbine plant in FIG. 1 is provided with a bypass pathway 11 which has the helium gas being discharged from the LPT 3 bypass the PT 4 so as to supply to the heat exchanger 6 and also has a replaceable orifice 11a installed to the bypass pathway 11 in order to control the flow volume of the helium gas flowing through the bypass pathway 11. Specifically, the flow volume of the helium gas flowing through the bypass pathway 11 and the flow volume of the helium gas being supplied to the PT 4 are set by the flow volume limit being determined by the orifice 11a which is installed to the bypass pathway 11.

When the bypass pathway 11 is provided as mentioned hereinabove, first, the rotating speeds of the HPT 2 and the LPT 3 during the rated load operation are measured. When the rotating speeds of the HPT 2 and the LPT 3 are lower than the rotating speed for safe operation, the LPT outlet pressure is decreased by bypassing the helium gas to the bypass pathway 11, thereby increasing the rotating speeds of the HPT 2 and the LPT 3.

When the gas turbine plant being constructed as mentioned hereinabove is operated at the rated load, fuel elements which are coated-particle fuels having minute ceramics fuel particles of fission products multiply-clad with prolytic carbons and silicon carbides are supplied to the high-temperature gas-cooled reactor 1 that is provided with a heat-resistant structure by employing heat-resistant graphite for the retarder and the in-core structural materials, and then, the fission products in the fuel elements perform nuclear fission. The thermal energy being generated by the nuclear fission of fission products is supplied to the helium gas being provided from the heat exchanger 6, and high temperature and high pressure helium gas is supplied to the HPT 2. In addition, pebble bed fuels or block fuels are employed as fuel elements consisting of coated-particle fuels.

Then, the HPT 2 is rotated by the high temperature and high pressure helium gas from the high-temperature gas-cooled reactor 1, so as to rotate the HPC 10, and at the same time, the helium gas being discharged from the HPT 2 is supplied to the LPT 3. In a similar manner, the LPT 3 is rotated by the helium gas rotating the HPT 2, so as to rotate the LPC 8, and at the same time, the helium gas being discharged from the LPT 3 is supplied to the PT 4. Furthermore, the PT 4 is rotated by the helium gas rotating the LPT 3, so as to rotate the generator 5, thereby generating the electrical power. At this time, as much helium gas as the flow volume set by the orifice 11a being installed is bypassed to the heat exchanger 6 from the LPT 3. The helium gas completing the work thereof by rotating the HPT 2, the LPT 3 and the PT 4, respectively, in a manner as described hereinabove, is supplied to the heat exchanger 6.

In the heat exchanger 6, high temperature helium gas being discharged from the PT 4 is supplied, and also, by having the helium gas being compressed in the HPC 10 perform heat exchange with the helium gas from the PT 4, the warmed helium gas from the HPC 10 is supplied to the high temperature gas-cooled reactor 1, and at the same time, the cooled helium gas from the PT 4 is supplied to the precooler 7. The helium gas being cooled by the precooler 7 is compressed and pressurized by being supplied to the LPC 8 which is rotated by the LPT 3. At this time, the density of the helium gas is increased by having the helium gas cooled by the precooler 7, thereby enhancing the compression efficiency in the LPC 8.

Then, the pressurized helium gas is compressed and pressurized by the HPC 10 which is rotated by the HPT 2 after being re-cooled by the intercooler 9. At this time, in the same manner as being cooled by the precooler 7, by having the helium gas cooled by the intercooler 9, the compression efficiency in the HPC 10 is enhanced by increasing the density of the helium gas. The helium gas being pressurized by the HPC 10 is warmed by the heat exchanger 6 and supplied to the high-temperature gas-cooled reactor 1.

In accordance with the present embodiment, as described hereinabove, the helium gas flowing through the bypass pathway 11 can be controlled to have an optimum flow volume by installing an orifice 11a to the bypass pathway 11. Specifically, by increasing the flow volume of the helium gas to be supplied of the PT 4 as much as possible and by setting the flow volume at the orifice 11a in order that a sufficient flow volume of helium gas for maintaining the rotating speeds of the HPT 2 and the LPT 3 at the designed values can be bypassed to the bypass pathway 11, the rated load operation can be carried out with safety and high efficiency.

### <Second Embodiment>

A second embodiment of the present invention will be described by referring to the drawing. FIG. 2 is a block diagram showing the construction of a gas turbine plant in accordance with the present embodiment. Additionally, the portions of the gas turbine plant in FIG. 2 that are used for the same purpose as the gas turbine plant in FIG .1 will be provided with the same symbols, and a detailed description thereof will be omitted.

Being different from the gas turbine plant in FIG. 1, the gas turbine plant in FIG. 2 is provided with a bypass valve 11b instead of the orifice 11a in the bypass pathway 11, and is also provided with a speed indicator 12 which measures the rotating speed of the HPT 2, a speed indicator 13 which measures the rotating speed of the LPT 3, and a bypass control section 14 which controls the lift of the bypass valve 11b in accordance with the rotating speeds of the HPT 2 and the LPT 3, respectively. The basic behaviors during the rated load operation of the gas turbine plant being constructed in such a manner as described hereinabove are the same as the first embodiment. Therefore, the first embodiment will be referred to, and a detailed description thereof will be omitted.

In the same manner as the first embodiment, by having the HPT 2, the LPT 3 and the PT 4 rotated and driven, respectively, by the high temperature and high pressure helium gas being supplied from the high-temperature gas-cooled reactor 1, the HPC 10, the LPC 8 and the generator 5 sharing the same shafts with the HPT 2, the LPT 3 and the PT 4, respectively, are operated, thereby performing the rated load operation. At this time, the rotating speed of the HPT 2 being detected by the speed indicator 12 and the rotating speed of the LPT 3 being detected by the speed indicator 13 are provided to the bypass control section 14, respectively. Then, in the bypass control section 14, the provided rotating speeds of the HPT 2 and the LPT 3 are compared to the designed values, respectively, so as to determine whether or not the HPT 2 and the LPT 3 are operated at safe rotating speeds, respectively.

As described hereinabove, in accordance with the present embodiment, the rotating speeds of the HPT 2 and the LPT 3 can be controlled by confirming whether or not the rotating speeds of the HPT 2 and the LPT 3 are over the designed values, respectively, and by opening the bypass valve 11b in case where the rotating speeds of the HPT 2 and the LPT 3 are below the designed values. Specifically, by detecting the rotating speeds of the HPT 2 and the LPT 3, respectively, and by controlling the lift of the bypass valve 11b, the flow volume of the helium gas flowing through the bypass pathway 11 can be controlled so as to maintain the rotating speeds of the HPT 2 and the LPT 3 at the designed values. Consequently, the rated load operation can be performed with safety and high efficiency..

In addition, in the first and the second embodiments, the gas turbine plant consists of three-shaft gas turbines including the HPT, the LPT and the PT, but the first and the second embodiments are applicable to "n"- shaft gas turbine plant including more than two shafts, wherein the gas turbines sharing the same shafts with compressors of more than one shaft and a gas turbine sharing a same shaft with a generator are provided.

### <Third Embodiment>

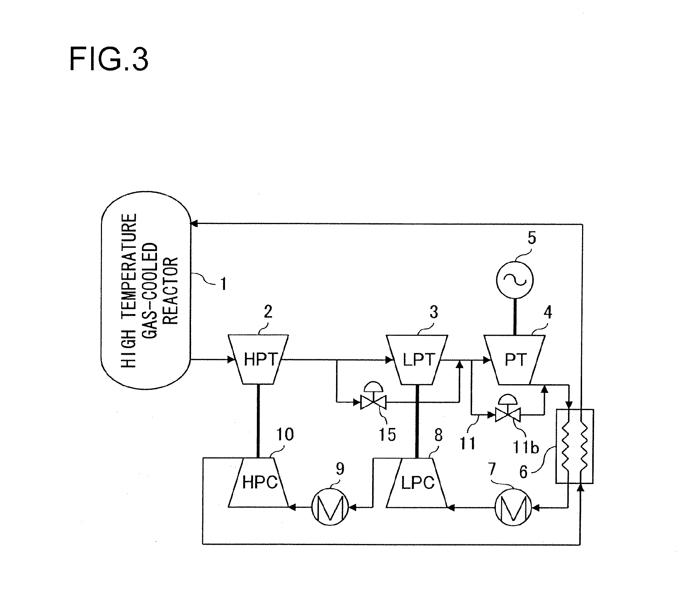

A third embodiment of the present invention will be described by referring to the drawings. FIG. 3 is a block diagram showing the construction of a gas turbine plant in accordance with the present embodiment. In addition, the portions of the gas turbine plant in FIG. 3 that are used for the same purpose as the gas turbine plant in FIG .2 will be provided with the same symbols, and a detailed description thereof will be omitted

In addition to the construction of the gas turbine plant in FIG. 2, the gas turbine plant in FIG. 3 is provided with a bypass valve 15 which has the helium gas being discharged from the HPT 2 bypass the LPT 3. During the rated load operation, the gas turbine plant being constructed in such a manner as described hereinabove performs basic behaviors explained in the first embodiment, by fully closing the bypass valve 15 and performing similar behaviors to those of the second embodiment so as to control the lift of the bypass valve 11b. Consequently, as for a detailed description about the behaviors during the rated load operation, the first and the second embodiments will be referred to, and a detailed description thereof will be omitted.

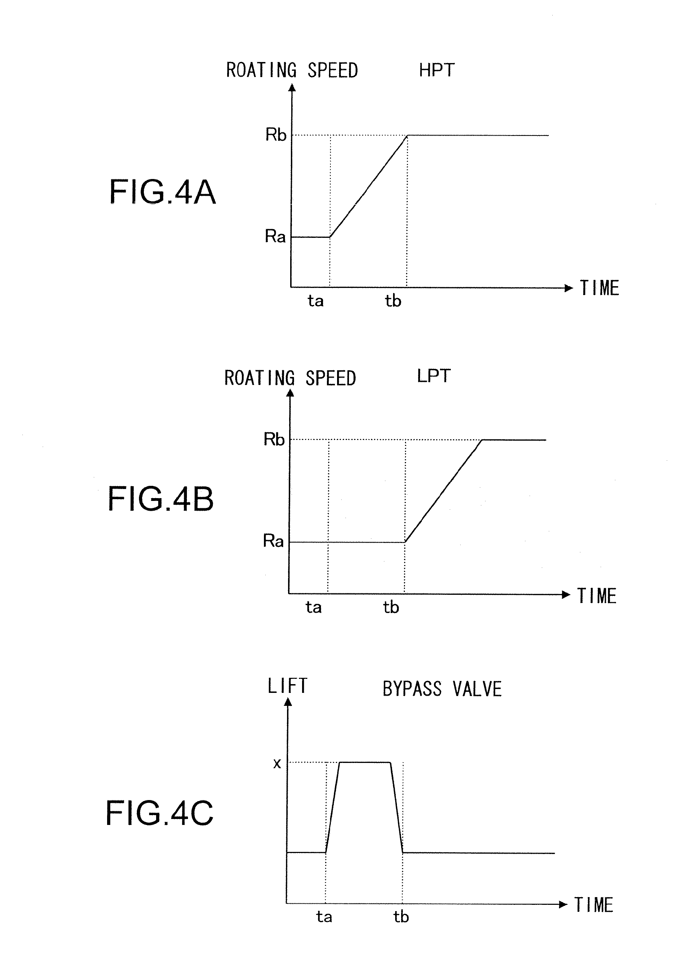

By referring to FIG. 4A through FIG. 4C, the behaviors during start-up of the gas turbine plant in accordance with the present invention will be described hereinafter. First, the bypass valves 11b and 15 are fully closed. Then, the helium gas in a storage tank (not being illustrated) is charged into the main system of the helium gas consisting of the high-temperature gas-cooled reactor 1, the HPT 2, the LPT 3, the PT 4, the heat exchanger 6, the LPC 8 and the HPC 9 in the gas turbine plant of FIG. 1. At this time, by starting up the blower system for initial setting (not being illustrated) at the same time, the helium gas being charged into the main system is circulated, and the flow volume is controlled so as to prevent the helium gas from flowing to the LPC8 and the HPC 10.

Then, when it is confirmed that the temperature and the pressure of the helium gas being charged into the main system reach predetermined values, the operation is shifted to the critical operation in the high-temperature gas-cooled reactor 1. And then, when the interior of the high-temperature gas-cooled reactor 1 reaches criticality, the outlet temperature of the high-temperature gas-cooled reactor 1 is controlled to fall within a predetermined temperature range. Subsequently, by controlling the flow volume of the helium gas flowing through the HPT 2, the LPT 3 and the PT 4 and by operating the generator 5 as a thyristor, the rotating speed of the PT 4 is increased up to the rated rotating speed "Rb." Then, when the rotating speed of the PT 4 is confirmed to have increased to the rated rotating speed "Rb," the generator 5 is synchronized.

As described hereinabove, when the generator 5 is synchronized after time "ta" has passed since initiation of start-up, as shown in FIG. 4A and FIG. 4B, the rotating speeds of the HPT 2 and the LPT 3 are confirmed to have reached the rotating speed "Ra." Then, the plant load is increased by controlling the flow volume of the helium gas flowing through the LPC 8 and the HPC 10. At this time, as shown in FIG. 4C, by opening the bypass valve 15 until the lift thereof reaches "x"%, a part of the helium gas from the HPT 2 is supplied to the PT 4 by way of the bypass valve 15. Then, the load is increased, and at the same time, as shown in FIG. 4A, the rotating speed of the HPT 2 is increased up to the rated rotating speed "Rb." In addition, by opening the bypass valve 15 until the lift thereof reaches "x"%, as shown in FIG. 4B, the rotating speed of the LPT 3 can be maintained at the rotating speed "Ra."

Then, when it is confirmed that the rotating speed of the HPT 2 reaches the rated rotating speed "Rb" after time "tb" passes, as shown in FIG. 4C, the bypass valve 15 is fully closed and all the helium gas from the HPT 2 is supplied to the LPT 3. In consequence, the flow volume of the helium gas flowing to the LPT 3 is increased, so that as shown in FIG. 4B, the rotating speed of the LPT 3 is increased to the rated rotating speed "Rb." When the rotating speeds of the HPT 2, the HPT 3 and the PT 4 are increased to the rated rotating speeds "Rb," the plant load is further increased, so that no-load operation is shifted to the rated load operation. In addition, when the plant load is increased as described hereinabove, the outlet temperature of the high-temperature gas-cooled reactor 1 is controlled to attain a predetermined temperature.

As described hereinabove, in the present embodiment, by installing a bypass valve 15, the rotating speeds of the HPT 2 and the LPT 3 can be controlled independently during plant start-up. In consequence, by increasing the rotating speeds of the HPT 2 and the LPT 3 up to the rated rotating speed, respectively, the HPT 2 and the LPT 3 can be operated in a safe region.

During start-up of the gas turbine plant as described hereinabove, the rotating speeds of the HPT 2 and the LPT 3 are increased sequentially by fully closing the bypass valve 11b and controlling the lift of the bypass valve 15 at the same time. However, by controlling the lift of the bypass valve 11b by using a similar timing to the bypass valve 15, it is possible to have the helium gas bypass the PT 4, and it is also possible to increase the rotating speeds of the HPT 2 and the LPT 3 sequentially.

Moreover, in the same manner as the second embodiment, the present embodiment may be provided with speed indicators 12 and 13 which measure the rotating speeds of the HPT 2 and the LPT 3, respectively, and with a bypass control section 14 which controls the lift of the bypass valve 11b in accordance with the rotating speeds of the HPT 2 and the LPT 3, respectively, wherein the flow volume of the helium gas may be controlled automatically so as to have the rotating speeds of the HPT 2 and the LPT 3 achieve the designed values.

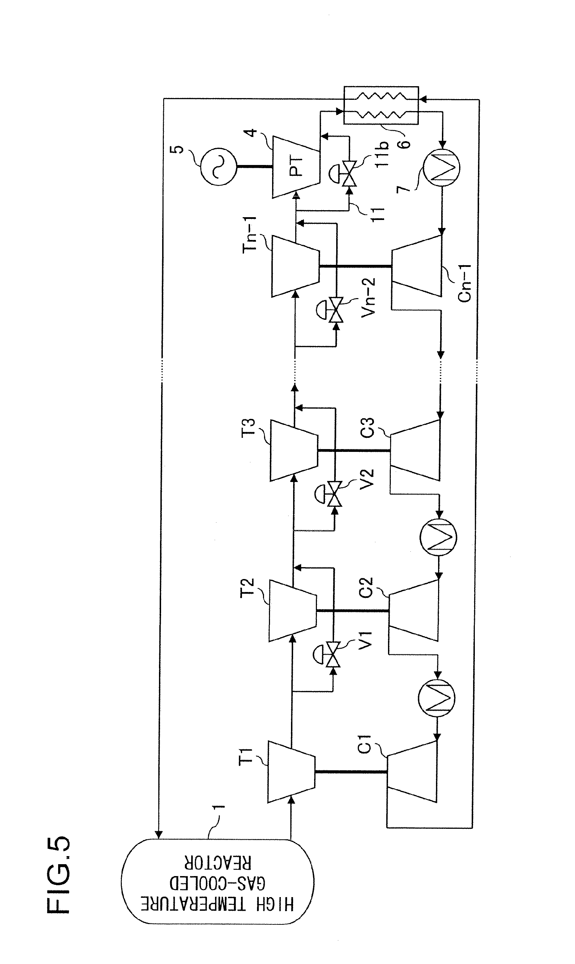

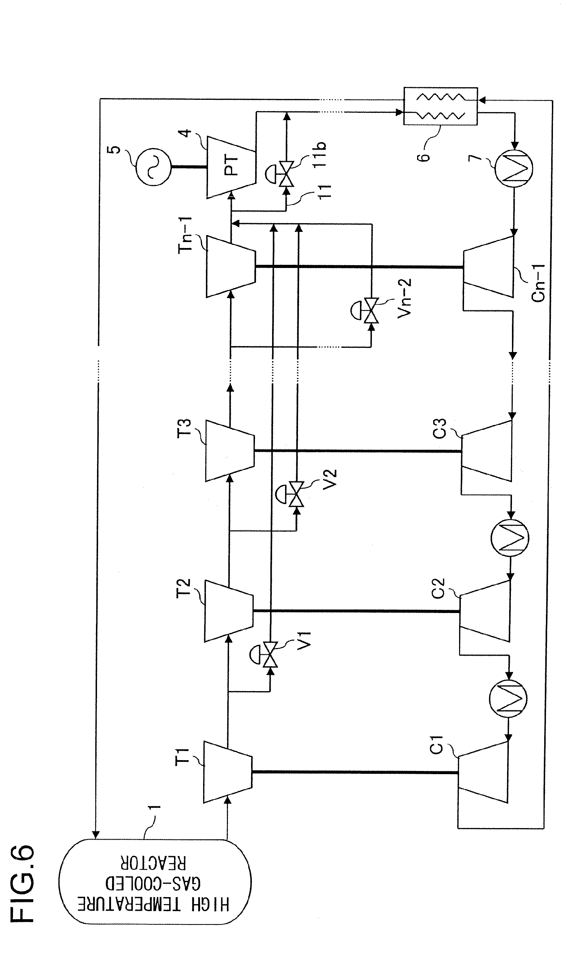

Additionally, the gas turbine plant in accordance with the present embodiment comprises three-shaft gas turbines, but may comprise "n"-shaft turbines having more than three shafts. Here, as shown in FIG. 5 and FIG. 6, because the gas turbine (PT) 4 sharing the same shaft with a generator is a single shaft gas turbine, the gas turbines "T1" through "Tn-1" sharing the same shafts with the compressors "C1" through "Cn-1," respectively, have "n-1"shafts, and at the same time, "n-2" pieces of bypass valves "V1" through "Vn-2" are installed in order to have the helium gas bypass each of the gas turbines "T2" through "Tn-2" sharing the same shafts with the compressors "C2" through "Cn-1," excluding the first-stage gas turbine "T1."

Then, as shown in FIG. 5, for each of the "n-2"-shaft gas turbines sharing the same shafts with the compressors, the bypass valves "V1" through "Vn-2" may be installed in a tandemly-arranged manner. Additionally, as shown in FIG. 6, the bypass valves "V1" through "Vn-2" may be installed in parallel in such an order as the bypass valve "V1" for bypassing the "n-2"-shaft gas turbines "T2" through "Tn-1," the bypass valve "V2" for bypassing the "n-3"-shaft gas turbines "T3" through "Tn-1" and so forth and the bypass valve "Vn-2" for bypassing a single shaft gas turbine "Tn-1."

Moreover, when the bypass valves "V1" through "Vn-2" are provided as shown in FIG. 5 and FIG. 6, in case of FIG. 5, first during start-up, the bypass valves "V1" through "Vn-2" are opened so as to place the gas turbine "T1" at the rated rotating speed. Subsequently, the bypass valves "V1," "V2" and so forth and "Vn-2" are fully closed sequentially, thereby the gas turbines "T2," "T3" and so forth and "Tn-1" are revved up to the rated rotating speed sequentially. At this time, the bypass valve 11b can be fully closed and can also be opened for a predetermined lift. In addition, in case of FIG. 6, first, the bypass valve "V1" is opened so as to place the gas turbine "T1" at the rated rotating speed. Subsequently, after fully closing the bypass valve "V1," the bypass valves are opened in such an order as the bypass valves "V2" and so forth and "Vn-2" in order to attain the lift thereof, and then fully closed, thereby the gas turbines are revved up in such an order as the gas turbines "T2," "T3" and so forth and "Tn-1" in order to achieve the rated rotating speeds. At this time, in a similar manner, the bypass valve 11b may be fully closed or may be opened for a predetermined lift.

### Industrial Applicability

The gas turbine plant in accordance with the present invention is applicable to a gas turbine plant being provided with a high-temperature gas-cooled reactor and gas turbines being connected to a plurality of shafts, and is also applicable, whether coated-particle fuels to be used for the high-temperature gas-cooled reactor are either pebble bed fuels or block fuels.

## Claims

1. A gas turbine plant comprises:
a high-temperature gas-cooled reactor which warms a coolant by thermal energy being obtained by nuclear fission of clad fission products in coated-particle fuels;
a first gas turbine that is rotated by the coolant being warmed by the high-temperature gas-cooled reactor and shares a same shaft with a compressor compressing the coolant;
a second gas turbine that is rotated by the coolant being discharged from the first gas turbine and shares a same shaft with a generator performing electrical power generation operation; and
a bypass pathway that has the second gas turbine bypassed to the coolant;
wherein, during the rated load operation, the flow volume of the coolant flowing through the bypass pathway is controlled so as to make the rotating speed of the first gas turbine fall within a range of a predetermined rotating speed.

2. A gas turbine plant as described in Claim 1:
wherein, the bypass pathway is provided with an orifice to control a flow volume of the coolant flowing through the bypass pathway.

3. A gas turbine plant as described in Claim 1:
wherein, the bypass pathway is provided with bypass valves to control a flow volume of the coolant flowing through the bypass pathway.

4. A gas turbine plant as described in any of Claim 1 through Claim 3:
wherein, "n" ("n" is an integer number being more than one (1).) units of compressors are provided and at a same time, the first gas turbines being connected to "n" shafts and sharing same shafts with the "n" units of compressors, respectively, are provided.
